# EUROPÄISCHE PATENTSCHRIFT

(11) **EP 1 680 929 B1**
(45) Veröffentlichungstag und Bekanntmachung des Hinweises auf die Patenterteilung: **04.06.2008**
(21) Anmeldenummer: 04802687.6
(22) Anmeldetag: 07.11.2004
(51) Int. Cl.: H04N 13/04

(54) **ANSTEUERUNG ZUR STEREOPROJEKTION**
STEREOPROJECTION CONTROL SYSTEM
COMMANDE DE STEREOPROJECTION

(30) Priorität: 07.11.2003 DE 10352492
(43) Veröffentlichungstag der Anmeldung: 19.07.2006
(73) Patentinhaber: Zink, Armin, 51491 Overath (DE)
(72) Erfinder: Zink, Armin, 51491 Overath (DE)
(74) Vertreter: Stute, Ivo Peter
(86) Internationale Anmeldenummer: PCT/DE2004/002469
(87) Internationale Veröffentlichungsnummer: WO 2005/046251

(56) Entgegenhaltungen:
- WO-A-02/076107
- US-A- 5 497 197
- US-A- 6 049 317
- US-A1- 2002 021 261

## Beschreibung

Die Erfindung betrifft einen DLP-Projektor zur aktiven Projektion von stereoskopischen Bildern mit einem DMD, mindestens einer ersten, mit einem Speicher zusammenwirkenden Treiberschaltung zur Ansteuerung mindestens eines DMDs sowie einem oder mehreren Signaleingängen für den Eingang der Bilddaten mindestens eines ersten und eines zweiten Bildkanals.

Für die stereoskopische Darstellung von Bildern gibt es zwei wesentliche Verfahren, die aktive und die passive Projektion.

Bei der passiven Projektion werden das erste und das zweite Bild eines stereoskopischen Bildpaares gleichzeitig auf einer Projektionswand dargestellt. Die Trennung der Bilder erfolgt durch Filter, beispielsweise Polarisationsfilter. Der Betrachter trägt Brillen mit entsprechenden Filtern, um mit jedem seiner Augen jeweils eines der beiden Bilder wahrzunehmen.

Bei der aktiven Projektionstechnologie werden die beiden Bilder sequentiell, also zeitlich nacheinander dargestellt. Zum Betrachten der beiden Bilder werden Shutterbrillen verwendet, die alternierend die Durchsicht für jeweils ein Auge im Takt des Bildwechsels verschlie-ßen. Um die Bilder flimmerfrei wahrnehmen zu können sind dabei hohe Wiederholfrequenzen erforderlich.

Aus der WO 95/18511 ist ein Verfahren sowie eine Vorrichtung zur Durchführung des Verfahrens zum Aufnehmen und zur aktiven Wiedergebe von stereoskopischen Videobildern beobachteter Szenen bekannt, bei dem das Aufnehmen bzw. Abspeichern von Bildern auf Herkömmlichen Datenträgern dadurch erleichtert wird, dass vor oder nach dem Aufnehmen eine Halbbilddetektion durchgeführt und damit die Zugehörigkeit der betreffenden Halbbilder zu den entsprechenden Teilbildern eines linken oder eines rechten Kanals bzw. die Zugehörigkeit zweier Teilbilder in parallelen Kanälen ermittelt wird. Mit dem System werden Vollbilder des rechten Kanals und des linken Kanals jeweils abwechselnd hintereinander auf einem CRT-Monitor dargestellt.

Aus der US 4,954,890 ist ein passives Projektionssystem mit zwei voneinander getrennten optischen Systemen mit jeweils einer Lichtquelle und einem LCD-Panel bekannt, die ein linkes und ein rechtes Bild auf einen Anzeigeschirm werfen, wobei ein rechtes aktuelles Bild auf ein linkes vorhergehendes Bild abgebildet wird und umgekehrt, um die Helligkeit des Bildes insbesondere im Vergleich zu herkömmlichen, vorbekannten, aktiven Systemen, in denen auf einem CRT-Monitor abwechselnd ein linkes und ein rechtes Bild dargestellt wird, zu verbessern. Hierzu wird den Bildspeicherelektroniken der LCD-Panels ein Demultiplexer vorgeschaltet, der die Signale einer Signalquelle kanalweise auf die Bildspeicher verteilt. Nachteilig an diesem System ist die Notwendigkeit zweier LCD-Panels und die damit verbundenen, vergleichsweise hohen Kosten.

Die Bildwiederhohlrate von LCD-Panels ist aufgrund ihrer internen Bildspeichereiektronik in aller Regel auf 60 Hz beschränkt, so dass sie zur aktiven Projektion stereoskopischer Bilder nicht geeignet sind.

DLP-Projektoren sind bekannt. DLP steht für Digital Light Processing. Basis dieser Technologie ist ein etwa Daumennagel großer, von der Firma Texas Instruments entwickelter Chip, ein sogenanntes Digital Mirror Device (DMD). Auf dem Chip-sind je nach Bildauflösung typischerweise 800 x 600, 1024 x 768 oder 1280 x 1024 oder noch höher mikroskopisch kleine Spiegel angebracht. Für jeden einzelnen Bildpunkt reflektieren die Spiegel ein von einer Lichtquelle stammendes Projektionslicht so, dass ein mit einer Datenquelle identisches Bild auf einer Projektionsfläche entsteht. Die Spiegel können elektronisch bis zu 50.000 mal in der Sekunde verstellt werden, so dass alle Bildpunkte bis zu 25.000 mal in der Sekunde ein-und wieder ausgeschaltet werden können. Zwischen den Spiegeln und der Lichtquelle ist ein schnell rotierendes Farbrad installiert, welches typischerweise 3 bzw. 4 einzelne Farbbilder in rot/blau/grün bzw. rot/blau/grün/weiß hintereinander erzeugt, die aber aufgrund der-schnellen Wiederholfrequenz und der Trägheit des menschlichen Auges als ein Bild wahrgenommen werden.

Es gibt verschiedene Bestrebungen, solche DLP-Projektoren zur Projektion von stereoskopischen Bildern zu verwenden.

Aus der DE 1 016 01 60 A1 ist ein Verfahren zur aktiven stereoskopischen Projektion mit einem DLP-Projektor der eingangs genannten Art bekannt. Er weist eine erste, ein DMD steuernde Treiberschaltung auf. Die Treiberschaltung wirkt mit jeweils zwei Speicherbausteinen zusammen, die jeweils zwei Speicherbänke aufweisen und über eine Umschaltvorrichtung, einem sogenannten Crossbar, der den Datenfluss von den Speicherbänken zum DLP-Speicher-Bus-System steuert, mit der Treiberschaltung verbunden wenden. Dabei werden die einzelnen Speicherbänke während vier Farbradumdrehungen in einem bestimmten Zyklus wahlweise mit den Bilddaten eines Bildes eines ersten oder zweiten Bildkanals beschrieben oder ausgelesen, wobei zum Beschreiben der Speicherbänke mit den Bilddaten des ersten und des zweiten Bildkanals die Dauer von vier Farbradumdrehungen benötigt werden und diese Daten während vier Farbradumdrehungen jeweils zweimal aus den Speicherbänken ausgelesen und über die Treiberschaltung dem DMD zugeführt werden. Als Signaleingang des DLP-Projektors dient ein sogenanntes Interface-Board.

Die Anforderungen an die Umschaltvorrichtungen hinsichtlich der Adressierung der einzelnen Speicherbänke und -adressen ist vergleichsweise aufwändig und kann insbesondere bei höheren Systemtaktraten zu Schwierigkeiten führen.

Des weiteren ist aus der WO 02/076107 A1 ein DLP-Proiektor zur aktiven Projektion von stereoskopischen Bildern mit einem DMD, einer mit einem Speicher zusammenwirkenden Treiberschaltung zur Ansteuerung eines DMD sowie einem Signaleingang für den Eingang der Bilddaten eines ersten und eines zweiten Bildkanals bekannt.

In der US 2002/021261 A1 ist eine 3D-Anzeige mit einer einzelnen, mit mehreren Speichern zusammenwirkenden Treiberschaltung offenbart.

Die Aufgabe der vorliegenden Erfindung besteht darin, die Ansteuerung eines Single-Chip-DMDs zur Projektion eines Stereobildes zu vereinfachen.

Diese Aufgabe wird bei einem DLP-Projektor der eingangs genannten Art gelöst durch mindestens eine zweite, mit einem Speicher zusammenwirkende Treiberschaltung sowie einer Umschaltvorrichtung, die auf der einen Seite mit den beiden Treiberschaltungen und auf der anderen Seite mit mindestens dem einen DMD verbunden ist, wobei die erste Treiberschaltung Bilddaten des ersten Bildkanals und die zweite Treiberschaltung Bilddaten des zweiten Bildkanals verarbeitet und die Umschaltvorrichtung dem DMD alternierend ein oder mehrere Bilder oder Teilbilder von der ersten Treiberschaltung und ein oder mehrere Bilder oder Teilbilder von der zweiten Treiberschaltung zuführt.

Unter Umschaltvorrichtung wird hier und im Folgenden jedes Schaltsystem verstanden, mit dem mehrere Datenquellen auf eine oder mehrere Datensenken schalten kann. Im einfachsten Fall werden die Daten von zwei Treiberschaltungen alternierend auf einen Datenbus geschaltet. Hierunter fällt aber auch ein Schaltsystem, dass mehr als 2 Datenquellen auf eine oder mehrere Datensenken geschaltet werden.

Unter Signaleingänge werden hier und im Folgenden sowohl Eingänge für analoge Signale, die dann digital gewandelt werden, als auch Eingänge für digitale Signale verstanden.

Der Kerngedanke der Erfindung besteht darin, die Bilddaten des ersten und zweiten Bildkanals nicht in einer ersten Treiberschaltung zu bearbeiten, sondern für jeden Bildkanal eine Treiberschaltung vorzusehen, wobei die Umschaltvorrichtung dafür Sorge trägt, dass dem

DMD in einem vorgegebenen Wechsel erst die Daten eines Bildes oder Teilbildes des ersten Bildkanals von der ersten Treiberschaltung und dann die Daten eines Bildes oder Teilbildes des zweiten Bildkanals der zweiten Treiberschaltung zugeführt werden. Hierdurch wird die inhärente Beschränkung des aus der DE 1 016 01 60 A1 bekannten Systems, bei dem die Bilddaten beider Bildkanäle von einer Treiberschaltung verarbeitet werden müssen, aufgehoben, in dem nun die Verarbeitung der Bilddaten der einzelnen Bildkanäle parallel erfolgt und erst danach in sequentieller Folge dem DMD zugeführt wird.

Die Umschaltvorrichtung wird dabei wesentlich vereinfacht, indem sie nicht mehr den Zyklus der Lese- und Schreibzugriffe auf verschiedene Speicherbänke steuern, sondern lediglich die Datenleitungen der Datenausgänge der verschiedenen Treibersysteme im Wechsel mit dem DMD verbinden muss. Eine Ansteuerung von Adressbereichen entfällt hierbei vollständig. Auch werden hierdurch die Anforderungen an die Taktung der Umschaltvorrichtung geringer, da sie lediglich im Takt des Bildwechsels am DMD erfolgen muss und somit bei heutigen DMDs 120 Hz in der Regel nicht überschreitet. Schließlich können die Daten jeweils eines Bildes aufgrund der parallelen Verarbeitung der Daten der verschiedenen Bildkanäle innerhalb von zwei Farbradumdrehungen zur Verfügung gestellt werden. Hierdurch wird eine wesentlich ruckelfreiere Projektion einer Folge von stereoskopischen Bildern und damit eine bessere Projektionsqualität möglich.

Wenn die Umschaltvorrichtung, wie bei dem erfindungsgemäßen System vorgesehen, erst am Ende der Bildverarbeitungspipeline angeordnet ist, ist eine maximale Bildfrequenz und Qualität von mit dem DLP-Projektor aktiv darzustellenden stereoskopischen Bildern möglich. Auch wird es mit dieser Systematik auf einfache Weise möglich, dem DMD mehr als zwei Bildkanäle zuzuführen, wobei gegebenenfalls auch mehrere DMDs an den Datenbus des Systems angehängt und die Bildkanäle in sinnvoller Weise auf die DMDs verteilt werden können.

Grundsätzlich können die Bilddaten der Bildkanäle, also insbesondere des ersten und des zweiten bzw. rechten und linken Bildkanals, sequentiell hintereinander über genau einen Signaleingang empfangen werden. In diesem Fall müssen die Bilddaten der jeweiligen Bildkanäle über eine entsprechende, dem Signaleingang zugeordnete Logik auf die Treiberschaltungen verteilt werden. Damit ein stereoskopisches Bild bzw. eine Bildfolge mit stereoskopischen Bildern flimmerfrei projiziert werden kann bzw. können, muss die Logik zur Erzeugung der Bilddaten, beispielsweise ein Computer mit einer Grafik- oder Videokarte, dann allerdings die Bilddaten schnell genug zur Verfügung stellen können. Es kann daher von Vorteil sein, wenn mindestens ein zweiter Signaleingang vorgesehen ist, wobei der-erste Signaleingang die Bildsignale des ersten Stereokanals empfängt und an die erste Treiberschaltung weiterleitet und der zweite Signaleingang die Bildsignale des zweiten Stereokanals empfängt und an die zweite Treiberschaltung weiterleitet. Somit können dem DLP-Projektor die Daten der einzelnen Bildkanäle zueinander parallel zugeführt werden.

Sofern die Daten der jeweiligen Bildkanäle dem DLP-Projektor synchronisiert zugeführt werden, kann gegebenenfalls auf eine Synchronisierung der Bildsignale der einzelnen Bildkanäle verzichtet werden. Ist dem nicht so, ist es notwendig, dass der DLP-Projektor .einen Taktgeber zur Synchronisierung der Bildsignale aufweist. Dabei kann es beispielsweise von Vorteil sein, wenn die Signaleingänge und/oder die Treiberschaltungen miteinander durch ein Taktgebersignal synchronisiert werden.

Eine andere bevorzugte Ausführungsform sieht einen Mikroprozessor vor, der die Umschaltvorrichtung steuert und/oder ein Steuersignal für eine Shutterbrille erzeugt. Ein solcher Mikroprozessor ist insbesondere dann notwendig, wenn dem DLP-Projektor die Daten der jeweiligen Bildkanäle unsynchronisiert zugeführt werden oder innerhalb des DLP-Projektors nicht synchron verarbeitet werden. Erfolgt die Synchronisierung der Daten der Bildkanäle außerhalb des Projektors derart, dass auch der Schalttakt der Umschaltvorrichtung und damit der Bildwechsel des oder der DMDs hiervon abgeleitet werden kann, kann auch die Steuerung von Shutterbrille über ein außerhalb des DLP-Projektors für die Synchronisierung der Daten zur Verfügung gestelltes Taktsignal erfolgen, beispielsweise -dann, wenn mehrere DLP-Projektoren parallel geschaltet sind und ein Projektor einen Bildwechselsignalausgang aufweist, über den die parallel geschalteten Projektoren das Signal zum Bildwechsel für die jeweiligen Umschaltvorrichtungen abgreifen.

Die höchste Farbtiefe bei der Projektion stereoskopischer Bilder ist zur Zeit mit Treibersohaltungen zu erzeugen, die auf einem ASIC des Typs DDP 1000 der Firma Texas Instruments basieren und insoweit bevorzugt sind.

Die Umschaltvorrichtung kann grundsätzlich alle Signaleingänge und -ausgänge des DMDs mit den korrespondierenden Signaleingängen und -ausgängen jeweils einer Treiberschaltung verbinden und alle Signalleitungen dann auf eine andere Treiberschaltung umschalten. Einfacher ist es aber, wenn die Umschaltvorrichtung alle Signalleitungen mit einer ersten Treiberschaltung verbindet und lediglich die Datenleitungen des DMDs auf die jeweiligen Treiberschaltungen umschaltet.

In einer anderen bevorzugten Ausgestaltung verbindet die Umschaltvorrichtung zur Projektion der Bilddaten eines Bildkanals als Monobild bzw. einer Monobild-Folge die Datenleitungen des DMDs über einen gewünschten Zeitraum lediglich mit den entsprechenden Datenleitungen einer der Treiberschaltungen. Hierfür kann beispielsweise eine Logiksteuerung vorgesehen sein, die über eine entsprechende Eingabe eines Nutzers des Projektors die Schaltposition der Umschaltvorrichtung auf einem Bildkanal "einfriert", so dass eine Monoprojektion des gewählten Bildkanals, gegebenenfalls bei voller Bildwiederholfrequenz des DMDs, erfolgt. Eine Shutterbrille kann über eine entsprechend vorzusehende Logik für diese Betriebsart so gesteuert werden, dass beide "Brillengläser" geöffnet bleiben, so dass der Betrachter die Monobilder mit beiden Augen betrachten kann.

In umgekehrter Weise kann in einer anderen bevorzugten Betriebsart vorgesehen sein, dass die Bilder eines Bildkanals über einen beliebig kurzen Zeitraum in eine Bildfolge anderer Bildkanäle eingespielt bzw. eingestreut werden. Bei einer solchen Betriebsart kann es von Vorteil sein, eine Shutterbrille derart zu steuern, dass beide "Brillengläser" während der Projektion der eingespielten oder eingestreuten Bilder verschlossen sind. Eine derartige Shutterbrillensteuerung kann beispielsweise dann von Vorteil sein, wenn beispielsweise in der Projektion virtueller Welten über die Projektion der eingestreuten Bilder auf im Raum befindliche dreidimensionale Objekte diese Objekte vermessen werden sollen, ohne dass der Betrachter irgend etwas davon bemerkt. Die Vermessung von dreidimensionalen Objekten über eine Projektion von Gittermustem auf diese Objekte wird in diesem Zusammenhang als bekannt vorausgesetzt und wird nicht weiter erläutert.

Schließlich ist es aus Gründen des einfacheren Aufbaus des DLP-Projektors von Vorteil, wenn die Treiberschaltungen und die Umschaltvorrichtung auf einer Platine angeordnet sind.

Im Folgenden wird die Erfindung anhand eines Blockschaltbilds, das ein bevorzugtes Ausführungsbeispiel der Erfindung zeigt, näher erläutert.

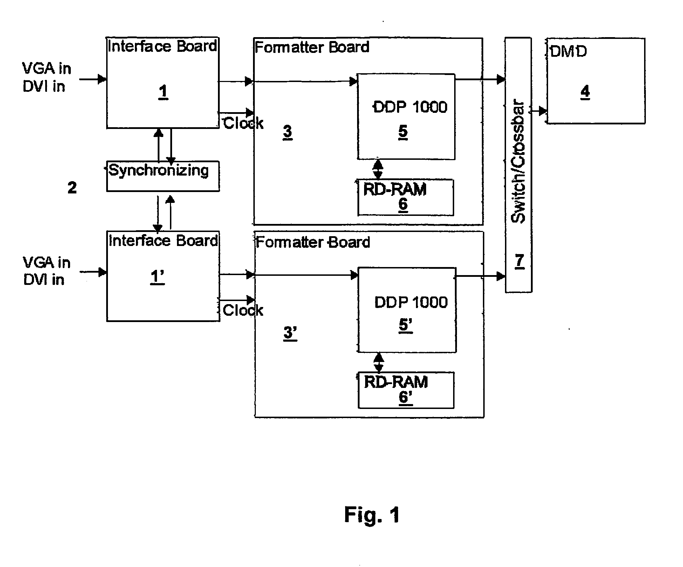

In der Figur sind die einzelnen, für die elektronische Datenverarbeitung der Bilddaten benötigten Schaltungsteile dargestellt. Als Signaleingänge sind zwei zueinander parallel geschaltete Interface-Boards **1, 1**' vorgesehen, die wahlweise analoge oder digitale Bilddaten empfangen können. Analoge Bilddaten werden auf den Interface-Boards **1,1**' durch A/D-Wandler in digitale Bilddaten umgesetzt.

Die Interface-Boards **1, 1'** werden über eine Synchronisationsvorrichtung **2** mithilfe eines Taktgebers, synchronisiert, indem die Bilddaten eines Bildes oder Teilbildes eines Bildkanals in einem Speicher auf dem Interface-Board gepuffert und erst mit erhalt eines Synchronisationssignals aus dem Speicher ausgelesen werden.

In Datenflussrichtung hinter jedem Interface-Boards **1, 1'** ist in Serie ein formatter-Board 3, **3'** angeordnet. Jedes Formatter-Board **3, 3'** erhält von dem vorgeschalteten Interface Board **1, 1'** sowohl digitale Bilddaten als auch ein Taktsignal (Clock). Auf den Formatter-Boards **3**, **3'** sind Treiberschaltungen zur Ansteuerung des in Datenflussrichtung nachgeordneten DMDs **4** angeordnet. Die Treiberschaltungen weisen jeweils einen ASIC **5, 5'** sowie jeweils einen mit dem ASIC **5, 5'** zusammenwirkenden Speicher **6, 6'** auf.

Die Ausgänge der Formatter-Boards **3,3'** liegen an einer Umschaltvorrichtung **7** an, die die Datenausgänge der Formatter-Board **3, 3'** mit dem DMD verbindet.

Als ASIC kommt insbesondere ein DDP 1000 der Firma Texas Instruments zur Steuerung des DMDs in Betracht.

Die Umschaltvorrichtung **7** ist so ausgeführt, dass alle Steuerungsleitungen des ASICs 5, die keine Bilddatenleitungen sind und zur Steuerung des DMDs **4** benötigt werden, durchgeschleift werden und über die Umschaltvorrichtung **7** unmittelbar mit dem DMD **4** verbunden sind. Demgegenüber werden die Ausgänge des ASlCs **5,** über die Bilddaten geführt werden, über die Umschaltvorrichtung wechselweise mit den Datenausgängen des ASICs **5'** des parallel geschalteten Formatter-Boards **3'** auf das DMD **4** geschaltet.

Die dargestellte Schaltungsanordnung kann auf viele Arten modifiziert werden, ohne dass hierdurch vom Grundgedanken der Erfindung abgewichen wird. So können beispielsweise weitere in Serie geschaltete Interface-Boards und Formatter-Boards parallel zu den dargestellten Boards angeordnet werden, so dass mehr als nur zwei Bildkanäle verarbeitet und über eine entsprechend modifizierte Umschaltvorrichtung auf den DMD aufgeschaltet werden können. Die Synchronisierung der Bilddatenverarbeitung muss nicht zwingend an den Interface-Boards erfolgen, es können auch die Formatter-Boards direkt über-einen Taktgeber synchronisiert werden, oder-es kann vollständig auf eine Synchronisierung in der Elektronik des DLP-Projektors verzichtet werden, wenn die Bilddaten der einzelnen Bildkanäle den Interface-Boards bereits in synchronisierter Form zugeführt werden. Wenn die Formatter-Boards auf einer Platine angeordnet sind, kann-es ausreichen oder sogar besonders vorteilhaft sein, wenn zwei oder mehrere Treiberschaltungs-ASICs verschiedener Bildkanäle einen gemeinsamen Speicher nutzen. Des weiteren können mehrere DMDs vorgesehen sein, so dass die Umschaltvorrichtung eine Menge von M Bildkanälen auf N DMDs verteilt.

## Patentansprüche

1. DLP-Projektor zur aktiven Projektion von stereoskopischen Bildern mit einem DMD (4), mindestens einer ersten, mit einem Speicher (6) zusammenwirkenden Treiberschaltung zur Ansteuerung mindestens eines DMDs (4) sowie einem oder mehreren Signaleingängen (1) für den Eingang der Bilddaten mindestens eines ersten und eines zweiten Bildkanals, **gekennzeichnet durch** mindestens eine zweite, mit einem Speicher (6') zusammenwirkende Treiberschaltung sowie einer Umschaltvorrichtung (7), die auf der einen Seite mit den beiden Treiberschaltungen und auf der anderen Seite mit mindestens dem einen DMD (4) verbunden ist, wobei die erste Treiberschaltung Bilddaten des ersten Bildkanals und die zweite Treiberschaltung Bilddaten des zweiten Bildkanals verarbeitet und die Umschaltvorrichtung (7) dem DMD (4) alternierend ein oder mehrere Bilder oder Teilbilder von der ersten Treiberschaltung und ein oder mehrere Bilder oder Teilbilder von der zweiten Treiberschaltung zuführt.

2. DLP-Projektor nach Anspruch 1, **gekennzeichnet durch** mindestens einen ersten und einen zweiten Signaleingang (1'), wobei der erste Signaleingang (1) die Bildsignale des ersten Bildkanals empfängt und an die erste Treiberschaltung weiterleitet und der zweite Signaleingang (1') die Bildsignale des zweiten Bildkanals empfängt und an die zweite Treiberschaltung weiterleitet.

3. DLP-Projektor nach Anspruch 1 oder 2, **gekennzeichnet durch** einen Taktgeber (2) zur Synchronisierung der Bildsignale.

4. DLP-Projektor nach Anspruch 2 oder dem auf Anspruch 2 rückbezogenen Anspruch 3, **dadurch gekennzeichnet, dass** die Signaleingänge (1, 1') miteinander durch ein Taktgebersignal synchronisiert werden.

5. DLP-Projektor nach Anspruch 3 oder 4, **dadurch gekennzeichnet, dass** die Treiberschaltungen durch ein Taktgebersignal miteinander synchronisiert werden.

6. DLP-Projektor nach einem der Ansprüche 1 bis 5, **gekennzeichnet durch** einen Mikroprozessor, der die Umschaltvorrichtung (7) steuert und/oder ein Steuersignal für eine Shutterbrille erzeugt.

7. DLP-Projektor nach einem der Ansprüche 1 bis 6, **dadurch gekennzeichnet, dass** die Treiberschaltungen mindestens einen ASIC (5, 5') des Typs DDP 1000 von Texas Instruments oder Nachfolgemodelle hiervon umfassen.

8. DLP-Projektor nach einem der Ansprüche 1 bis 7, **dadurch gekennzeichnet, dass** die Umschaltvorrichtung (7) alle Signalleitungen mit der ersten Treiberschaltung verbindet und lediglich die Datenleitungen des DMDs (4) wahlweise mit dem ersten oder einer anderen Treiberschaltung verbindet.

9. DLP-Projektor nach einem der Ansprüche 1 bis 8, **dadurch gekennzeichnet, dass** die Umschaltvorrichtung (7) zur Projektion der Bilddaten eines Bildkanals als Monobild bzw. einer Monobild-Folge die Datenleitungen des DMDs (4) über einen gewünschten Zeitraum lediglich mit den entsprechenden Datenleitungen einer der Treiberschaltungen verbindet.

10. DLP-Projektor nach einem der Ansprüche 1 bis 9, **dadurch gekennzeichnet, dass** die Treiberschaltungen und die Umschaltvorrichtung (7) auf einer Platine angeordnet sind.

## Claims

1. DLP-projector for the active projection of stereoscopic images, comprising a DMD (4), at least a first driver circuit interacting with a memory (6) and controlling at least one DMD (4), and one or more signal inputs (1) for the input of image data of at least a first image channel and a second image channel, **characterized by** at least a second driver circuit interacting with a memory (6') and a switching device (7), which is connected on one side with the two driver circuits and on the other side with at least the one DMD (4), wherein the first driver circuit processes image data of the first image channel and the second driver circuit processes image data of the second image channel, and the switching device (7) directs to the DMD (4), alternatingly, one or more images or frames from the first driver circuit, and one or more images or frames from the second driver circuit.

2. DLP-projector according to claim 1, **characterized by** at least a first and a second signal input (1'), wherein the first signal input (1) receives the image signals of the first image channel and forwards such to the first driver circuit, and the second signal input (1') receives the image signals of the second image channel and forwards such to the second driver circuit.

3. DLP-projector according to claim 1 or 2, **characterized by** a clock (2) for synchronizing of the image signals.

4. DLP-projector according to claim 2 or claim 3 being back referred to claim 2, **characterized in that** the signal inputs (1, 1') are synchronized with one another by a clock signal.

5. DLP-projector according to claim 3 or 4, **characterized in that** the driver circuits are synchronized with one another by a clock signal.

6. DLP-projector according to one of claims 1 to 5, **characterized by** a microprocessor, which controls the switching device (7) and/or produces a control signal for shutter-glasses.

7. DLP-projector according to one of claims 1 to 6, **characterized in that** the driver circuits comprise at least one ASIC (5, 5') of type DDP 1000 of Texas Instruments or successor models thereof.

8. DLP-projector according to one of claims 1 to 7, **characterized in that** the switching device (7) connects all signal lines with the first driver circuit and that it connects data lines of the DMD (4) only selectively with the first driver circuit or another driver circuit.

9. DLP-projector according to one of claims 1 to 8, **characterized in that** the switching device (7), for the projection of the image data of an image channel as a mono-image, or a mono-image sequence, connects the data lines of the DMD (4) during a desired period of time only with the corresponding data lines of one of the driver circuits.

10. DLP-projector according to one of claims 1 to 9, **characterized in that** the driver circuits and the switching device (7) are arranged on a circuit board.

## Revendications

1. Projecteur DLP pour la projection active d'images stéréoscopiques avec un DMD (4), au moins un premier circuit d'attaque qui coopère avec une mémoire (6) pour commander au moins un DMD (4) ainsi qu'une ou plusieurs entrées de signaux (1) pour l'entrée des données d'image d'au moins un premier et un deuxième canal d'image, **caractérisé par** au moins un deuxième circuit d'attaque coopérant avec une mémoire (6') ainsi qu'un dispositif de commutation (7) qui est relié d'un côté aux deux circuits d'attaque et de l'autre côté au DMD (4) au nombre d'au moins un, le premier circuit d'attaque traitant les données d'image du premier canal d'image et le deuxième circuit d'attaque les données d'image du deuxième canal d'image, et le dispositif de commutation (7) amenant au DMD (4) alternativement une ou plusieurs images ou images partielles du premier circuit d'attaque et une ou plusieurs images ou images partielles du deuxième circuit d'attaque.

2. Projecteur DLP selon la revendication 1, **caractérisé par** au moins une première et une deuxième entrée de signaux (1'), la première entrée de signaux (1) recevant les signaux d'image du premier canal d'image et les transmettant au premier circuit d'attaque et la deuxième entrée de signaux (1') recevant les signaux d'image du deuxième canal d'image et les transmettant au deuxième circuit d'attaque.

3. Projecteur DLP selon la revendication 1 ou 2, **caractérisé par** une horloge (2) pour synchroniser les signaux d'image.

4. Projecteur DLP selon la revendication 2 ou la revendication 3 lorsqu'elle dépend de la revendication 2, **caractérisé en ce que** les entrées de signaux (1, 1') sont synchronisées entre elles par un signal d'horloge.

5. Projecteur DLP selon la revendication 3 ou 4, **caractérisé en ce que** les circuits d'attaque sont synchronisés entre eux par un signal d'horloge.

6. Projecteur DLP selon l'une des revendications 1 à 5, **caractérisé par** un microprocesseur qui commande le dispositif de commutation (7) et/ou un signal de commande pour des lunettes stéréoscopiques.

7. Projecteur DLP selon l'une des revendications 1 à 6, **caractérisé en ce que** les circuits d'attaque comprennent au moins un ASIC (5, 5') du type DDP 1000 de Texas Instruments ou des modèles successeurs de celui-ci.

8. Projecteur DLP selon l'une des revendications 1 à 7, **caractérisé en ce que** le dispositif de commutation (7) relie toutes les lignes de signaux au premier circuit d'attaque et seulement les lignes de données du DMD (4) au choix au premier ou à un autre circuit d'attaque.

9. Projecteur DLP selon l'une des revendications 1 à 8, **caractérisé en ce que**, pour la projection des données d'image d'un canal d'image sous forme de mono-image ou d'une suite de mono-images, le dispositif de commutation (7) relie les lignes de données du DMD (4) pendant un laps de temps souhaité seulement aux lignes de données correspondantes d'un des circuits d'attaque.

10. Projecteur DLP selon l'une des revendications 1 à 9, **caractérisé en ce que** les circuits d'attaque et le dispositif de commutation (7) sont disposés sur une platine.
